# EUROPEAN PATENT SPECIFICATION

(11) **EP 2 862 904 B1**
(45) Date of publication and mention of the grant of the patent: **21.06.2017**
(21) Application number: 13005007.3
(22) Date of filing: 18.10.2013
(51) Int. Cl.: C09D 4/06, C09D 133/12, C08L 33/12

(54) **Polymeric material, article comprising said poymeric material and method for producing the same**
Polymermaterial, Artikel mit diesem Polymermaterial und Verfahren zu seiner Herstellung
Matériau polymère, article comprenant ledit matériau polymère et son procédé de production

(43) Date of publication of application: 22.04.2015
(73) Proprietor: Samtastic Products GmbH, 73037 Göppingen (DE); S u. K Hock GmbH, 94209 Regen (DE)
(72) Inventor: Hock, Klaus, 94209 Regen (DE); Hock, Eva-Maria, 94209 Regen (DE); Hock, Franz-Josef, 94209 Regen (DE); Mauk, Hanns Jörg, 74395 Mundelsheim (DE); Voith, Bernhard, 73037 Göppingen (DE)
(74) Representative: Müller-Boré & Partner Patentanwälte PartG mbB

(56) References cited:
- US-A- 3 996 173
- US-A- 4 085 246
- US-A1- 2010 036 056
- US-A1- 2010 093 924

## Description

The present invention relates to a polymeric material and to an article, such as a molded article, comprising said polymeric material, which may be used for instance in form of a sheeting as a paneling wall, a ceiling, a decorative film or a synthetic veneer and in particular as of a floor covering. Furthermore, the present invention relates to a method for producing said article, preferably said sheeting.

Multilayer plastic webs based on polyvinylchloride (PVC) with a transparent cover layer as the wear layer have been used for many decades as floor coverings. However, other plastics, *i.e.,* polymers such as ethylene-vinyl acetate (EVA) copolymers, plastics based on olefinic polymers such a polyethylene (PE), polypropylene (PP), ethylene-propylene copolymers and copolymers of ethylene with other olefinic unsaturated compounds are also used to produce floor coverings.

Such multilayer plastic webs, sheets or panel used as a floor covering generally consists of at least two layers, a transparent cover layer or wear layer, respectively (also known as a clear layer or clear film) and a base layer (also known as base film). Another layer (referred to as the print film, white film, printing film, print carrier or printed white film) is often arranged between the cover layer and the base layer.

Also, laminate floorings, which are multi-layer synthetic flooring products fused together with a lamination process under high pressure and high temperature, are well known for many years. These non-elastic laminate floorings principally comprise a support layer on which several layers of different purposes are to be arranged. In particular, specific layers which should provide a pattern or special designs, such as for example a specific embossing, are commonly used in such laminate floorings.

Within the last years, due to a big drop in prices in the field of laminate floorings, several efforts have been made to combine the advantages of the non-elastic laminate floorings with those of flexible floorings, particularly with PVC floor coverings. Initial attempts were based on the idea to affix flexible, particularly PVC-floorings on laminate floorings used as support. In particular, about 1 to 2 mm thick luxury vinyl tiles (LVT) affixed on non-elastic supports were considered to have beneficial properties e.g. to be easy in installation. However, these attempts could not result in competitive floorings as the manufacturing costs are far too high.

Recently, progress had been made to overcome the aforementioned drawbacks. The recent developments enable to "blow-up" common PVC-floorings, particularly 2 mm LVT floorings to about 5 mm. These floorings, due to their thickness, allow the shaping of the edge profile according to which specific designs can be employed allowing an easy installation by e.g. so-called click-systems.

However, since sustainability as well as health issues become nowadays more and more a main issue, it would be desirable to avoid the use of PVC based materials for the production of webs or sheets to be mainly used indoors in large-scales.

Besides, molded articles based on acrylate polymers to be used for paneling walls or floor coverings are also known. These acrylate polymers, which are also known as acrylics or polyacrylates, are commonly formed from acrylate monomers based on the structure of acrylic acid, which consists of a vinyl group and a carboxylic acid terminus and their derivatives, respectively.

DE 20 06 197 B2, for example, discloses a flame retardant article obtained by polymerization of methylmethacrylate (MMA) or mixed polymerization of MMA and compounds having a terminal ethylenically unsaturated moiety in the presence of a water soluble catalyst and an alumina trihydrate filler. Even though said document generally describes that the content of the filler may be in the broad range of 20 to 85 wt%, in the examples of DE 20 06 197 B2 the amount of alumina trihydrate is 57.7 wt% and 60 wt%, respectively.

Many corresponding polymer compositions provided with fillers are known for floor tiles, panels for cosmetic items in bathrooms as well as dishes and other construction purposes. For example, US-patent 3,847,865 describes products made of simulated marble, US-patents 3,324,074 and 3,663,493 describe acrylic polymers with inorganic filler material particles suitable for the production of moldings and castings, such as table tops, and US-patent 4,085,246 describes simulated granites and their production.

As commercial acrylate-based products e.g. Corian^{®} filled with aluminium trihydroxide (ATH) from E.I. du Pont de Nemours and Company, the ATH-filled Cristalan^{®} from Schock & Co. GmbH, and also their quartz-containing Cristalite^{®} may be mentioned. However, these acrylate-based products based on acrylate polymers are not flexible and contain relatively large amounts of quartz. Thus, it is not possible to use such a material e.g. as floor covering on rough grounds without using special substructures allowing an even installation of such floor coverings. In addition, due to the large amount of fillers, especially in case of quartz-containing fillers, and the hardness of the products associated therewith, it is rather uneconomical to shape the edge profile e.g. by milling, since the mechanical wear of the tools used therefor is considerably high.

Generally, in order to increase the flexibility of such acrylate-based products based on acrylate polymers it is commonly known to admix comonomers in the range of several wt%. These diluents/plasticizers such as phthalates, butyl acrylates, however, have often negative side-effects.

Further, DE 10 2005 004 639 A1 describes radically curable synthetic resins consisting of poly(meth)acrylate-urethane acrylates in urethane acrylates and optionally reactive diluents and/or (meth)acrylates, their production starting from solutions of multifunctional poly-(meth)acrylates and their use as binding agents in radically curable mixtures of materials, as well as the composite materials and workpieces obtained from these mixtures, and also the production and use of these same mixtures of materials, composite materials and workpieces.

However, such acrylic materials, when compared to PVC, are relatively expensive.

Accordingly, products which should have a specific thickness to be capable to employ e.g. the above-mentioned click-system, would be too expensive to be commercially interesting. US 3 996 173 relates to an impact resistant thermoplastic molding composition consisting essentially of a vinyl chloride polymer and of a modifying resin for increasing the impact resistance, having a further content of a coated calcium carbonate powder. Therefore, one object of the present invention is to provide a polymeric material and an article, such as a molded article, comprising said polymeric material to be used for instance in form of a sheeting as paneling walls, ceilings, as decorative film or synthetic veneer and in particular as floor covering, which should overcome the above-mentioned drawbacks. In particular, an object of the present invention is to provide an article to be used as paneling walls, ceilings, as decorative film or synthetic veneer and in particular as floor covering which can be produced at low cost and the flexibility of which should be adjustable depending on the indented use of said article, even though the use of materials being harmful to the environment, such as PVC or plasticizers such as phthalates, can be avoided. Another object of the present invention is to provide a method with which such an article can be produced easily and inexpensively, whereby machines/devices known in the prior art can still be used for the production of such articles without any great increase equipment expense.

These objects are achieved by the embodiments defined in the claims, with advantageous and preferred embodiments of this invention being characterized in the dependent claims.

In particular, the present invention according to claims 1 to 12 provides a polymeric material obtainable by thermally curing a composition, said composition comprising 45 to 98 wt% of a blend, based on the total weight of the composition, comprising a mixture of (meth)acrylate monomers and, based on the total weight of the blend, 2 to 40 wt% poly(meth)acrylate, and at least one of the following components (b):
(b) at least one comonomer selected from natural terpenes and derivatives thereof, and at least one filler, wherein the total amount of components (b) is in the range of from 0.01 to 55 wt%, based on the total weight of the composition.

That means, the thermally curably composition according to the present invention comprises besides the at least one filler a blend, which may be also referred to as binder, including a mixture of (meth)acrylate monomers and poly(meth)acrylate, and at least one of the components (b). According to the present invention, the composition preferably comprises a (meth)acrylate based mixture consisting of (meth)acrylate monomers and poly(meth)acrylate, which after curing may be referred to as thermoplastic resin matrix which is based on poly(meth)acrylates in (meth)acrylate monomers. That is, the (meth)acrylate based thermoplastic resin matrix according to the present invention is obtained by using esters of acrylic acid or of methacrylic acid. Here, it should be noted that the term (meth)acrylates as used in the present invention encompasses both methacrylates and acrylates.

To manufacture the thermoplastic resin matrix, a free-flowing mixture is preferably made from a solution of poly(meth)acrylate in monomeric (meth)acrylate. According to the present invention, the (meth)acrylate used as monomers constituting the (meth)acrylate based thermoplastic resin matrix are not specifically restricted as long as these monomers are polymerizable and result in thermoplastic polymers, including homopolymers as well as copolymers. Examples of said (meth)acrylates used as monomers include *inter alia* methyl(meth)acrylate, ethyl(meth)acrylate, propyl(meth)acrylate, n-butyl(meth)acrylate, i-butyl(meth)acrylate, n-hexyl(meth)acrylate, 2-ethylhexyl(meth)acrylate, isodecyl(meth)-acrylate, dodecyl(meth)acrylate, phenoxyethyl(meth)acrylate, cyclohexyl(meth)acrylate, iso-bornyl(meth)acrylate, benzyl(meth)acrylate, ethyleneglycolnonylphenylether(meth)acrylate, tripropyleneglycolnonylphenylether(meth)acrylate, tetrahydrofurfuryl(meth)acrylate, butyldi-glycol(meth)acrylate, methoxpolyethyleneglycol(meth)acrylate, polyethyleneglycoldi(meth)-acrylate, ethyleneglycoldi(meth)acrylate, neopentylglycoldi(meth)acrylate, 1,3-butanedioldi-(meth)acrylate, 1,4-butanedioldi(meth)acrylate, 1,6-hexanedioldi(meth)acrylate, 1,12-dodecanthioldi(meth)acrylate, stearyl(meth)acrylate, diethyleneglycoldi(meth)acrylate, triethyleneglycoltri(meth)acrylate, tetraethyleneglycoldimethacrylate, trimethylolpropanetri-(meth)acrylate, dipentolhexa(meth)acrylate, diurethanedi(meth)acrylate and/or polyester-(meth)acrylates. Among these examples, methyl(meth)acrylate, ethyl(meth)acrylate, propyl-(meth)acrylate, n-butyl(meth)acrylate and isobornyl(meth)acrylate or mixtures thereof are especially preferred.

According to a preferred embodiment of the present invention, the (meth)acrylate to be used in the thermoplastic resin matrix is obtained from renewable raw materials or from a sustainable, such as an enzymatic, manufacturing process.

According to the present invention, the thermally curable composition comprises 45 to 98 wt%, preferably 50 to 95 wt%, and more preferably 55 to 94 wt% of the aforementioned blend, which as pre-cross-linked system involves a smaller shrinkage and prevents fillers and optional other additives from settling during the time of curing. Thus, since the fillers and optional other additives remain evenly suspended, it is possible to provide an homogeneously cured material. Examples of a free-flowing mixture usable according to the present invention are *interalia* described in EP 0 361 101 A1 or EP 0 683 806 A1.

Preferably, the content of poly(meth)acrylate in the (meth)acrylate based mixture consisting of (meth)acrylate monomers and poly(meth)acrylate is 2 to 35 wt%. More preferably, the content of poly(meth)acrylate in the (meth)acrylate based mixture consisting of (meth)acrylate monomers and poly(meth)acrylate is 2 to 10 wt% if the composition according to the present invention contains the at least one thermoplastic polymer (a).

According to the present invention, the polymers constituting the (meth)acrylate based thermoplastic resin matrix are not specifically restricted. In particular, polymers having different molecular weights can be used. Here, it should be noted that, even if polymers having enhanced impact resistance would be used, the resulting polymeric material obtained from the thermally curable composition will be always relatively brittle and non-flexible. That means, upon variation of the poly(meth)acrylate, it is not possible to remarkably improve the elasticity of the resulting polymeric material obtained from the thermally curable composition.

According to claims 2 to 12, it has been surprisingly found that the addition of at least one thermoplastic polymer (component (a)), which is different from the poly(meth)acrylate, improves the flexibility and impact resistance of the resulting composite material obtained from the thermally curable composition. The thermoplastic polymer which may be contained as component (a) in the composition according to the present invention is not particularly limited as long as it is soluble in the (meth)acrylate monomers and does not contain any scavenger and/or moieties capable to absorb radicals produced during polymerization. Preferably, the component (a) used to improve the flexibility of the resulting composite material is selected from acrylonitrile butadiene styrene (ABS), polystyrene, thermoplastic elastomers, polyester elastomers, thermoplastic polyurethanes, thermoplastic polyamide copolymers or mixtures thereof.

According to a preferred embodiment of the present invention, the content of these additional polymers referred to as component (a) and the poly(meth)acrylate in the thermally curable composition is 2 to 40 wt%, preferably 5 to 35 wt%, most preferably 10 to 30 wt%, based on the total amount of the blend.

Generally, it is thought that another possibility to improve the flexibility and impact resistance of products obtained from the aforementioned (meth)acrylate based thermoplastic resin matrix would rely in the addition of comonomers to the monomeric solution. However, the copolymerization of these comonomers does not result in a polymeric material having improved flexibility and impact resistance, since these comonomers will not be completely reacted during polymerization leading also to unwanted side-effects, particularly to unpleasant odors.

However, according to the present invention, it has been surprisingly found that adding small amounts of at least one comonomer selected from natural terpenes and derivatives thereof (component (b)) remarkably improves the flexibility of the resulting polymeric material obtained from the thermally curable composition. Preferably, according to the present invention, component (b) is selected from natural terpene-based resins and derivatives thereof including monoterpenes, sesquiterpenes, diterpenes, sesterterpenes, triterpenes, tetraterpenes and polyterpenes. These terpenes may be acyclic terpenes as well as cyclic terpenes including polycyclic terpenes. According to the present invention, it is particularly preferred that component (b) is at least one component selected from the group consisting of abietic acid-based resins such as rosin, limonene, pinene, myrcene and camphene or mixtures thereof. These comonomers selected from natural terpenes and their derivatives surprisingly improve the flexibility of the resulting polymeric material obtained by curing the thermally curable composition, since the compounds of component (b) of the present invention unexpectedly react with the (meth)acrylate based mixture.

However, the polymerization rate of these comonomers is smaller compared to the (meth)acrylate monomers according to which the comonomers are usually not entirely polymerized. Thus, the comonomers of component (b) may partially remain unpolymerized in the resulting polymeric material, and thus imparting a pleasant flavor to the resulting polymeric material. However, even if component (b) is completely polymerized with the other components, the aforementioned unwanted side-effect can be avoided.

According to a preferred embodiment of the present invention, the content of component (b) is 0.01 to 20 wt%, preferably 0.01 to 10 wt%, more preferably 0.1 to 5 wt%, even more preferably 0.1 to 1 wt%, based on the total weight of the composition. If component (b) is contained in the polymeric material according to the present invention within these low amounts, the resulting product exhibits a pleasant flavor. Moreover, such contents are completely harmless with respect to any environmental or health issues. As will be discussed in more detail below, since the resulting polymeric material according to the present invention is preferably further processed by thermally pressing and/or fixing, any unpolymerized content of the component (b) will be further reacted within these additional process steps.

According to the present invention, besides adding component (a) to the thermally curable composition, another possibility to obtain a polymeric material having improved flexibility is the addition of at least one organic compound having a molecular weight of 500 or below selected from at least one dicarboxylic acid ester or a derivative thereof and/or at least one polycarboxylic acid ester or a derivative thereof (component (c)). These low-molecular weight organic compounds do not participate in the polymerization reaction. Instead, compounds of component (c) cause a plastification of the molecules in the composition. The reason therefore is believed to rely in the fact that compounds of component (c) will be partially dissolved and/or cannot be incorporated into the molecular structure according to which the flexibility of the resulting polymeric material can be surprisingly improved. If component (c) is used, there is an interaction with the polar groups of the polymeric material according to which the flexibility of the chains can be improved. According to the present invention, compounds of component (c) are preferably selected from the group consisting of C₁-C₂₀ di-, tri-, and tetracarboxylic acid esters, where adipates and citrates, that means esters and the respective salts of adipic acid and citric acid are particularly preferred. Even more preferred low-molecular weight organic compounds used as component (c) are alkylated adipates and alkylated citrates such as triethyl citrate. These compounds may be preferably contained in the thermally curable composition of the present invention in amounts of 1 to 45 wt%, preferably 1 to 30 wt%, and more preferably 1 to 20 wt%, based on the total weight of the composition.

According to the present invention, it has been surprisingly found that, if the content of component (c) is approximately within 25 to 45 wt%, the surface of the resulting polymeric material remains advantageously somewhat sticky allowing the provision of additional layers on the material without the use of an adhesive. This is of particular interest, if the polymeric material obtained from the thermally curable composition according to the present invention is in the form of a paneling wall, a ceiling, a decorative film, a synthetic veneer or in the form of a floor covering, on which additional layers such as transparent layers, white layers, intermediate layers, protective layer etc. should be provided to obtain an article having specific physical as well as visual properties.

As mentioned above, according to the present invention adding at least one of the components (b) improves the flexibility and impact resistance of the resulting polymeric material obtained from the thermally curable composition. Preferably, the thermally curable composition contains (b) and at least one of the aforementioned components (a) or (c). Even more preferred is a thermally curable composition comprising each of the components (a) to (c) as the properties of the resulting polymeric material will be even more improved.

According to a preferred embodiment of the present invention, the total amount of components (a) to (c) contained in the thermally curable composition is in the range of from 0.01 to 55 wt%, preferably 1 to 40 wt%, even more preferably 10 to 35 wt%, most preferably 10 to 30 wt%, based on the total weight of the composition.

As outlined above, an object of the present invention is to provide a polymeric material and an article, such as a molded article, which is preferably in form of a sheeting, comprising said polymeric material which can be produced at low cost and the flexibility of which should be adjustable depending on the indented use of said article, even though the use of materials being harmful to the environment and health, such as PVC or plasticizers, such as phthalates, should be avoided. According to the present invention it has been found out that the aforementioned object can be solved, if the polymeric material and a layer of said polymeric material, respectively, has a density of 0.5 to 1.4 g/cm³.

The filler to be used in the present invention is not specifically restricted and principally each filler known to a person skilled in the art may be used as long as the resulting polymeric material and the respective layer of the polymeric material have a density of 0.5 to 1.4 g/cm³.

For example, commonly used fillers and aggregates, respectively, such as calcium and/or magnesium based carbonates, talc and aluminum trihydrate can be used. Preferably, the use of lightweight aggregates as a filler allows a remarkable reduction of the weight proportion of mineral fillers and inorganic fillers. This is required, since the desired flexibility of the resulting polymeric material is predominantly influenced by organic components of the thermally curable composition.

According to the present invention, the filler is preferably at least one lightweight aggregate. In particular, the lightweight aggregates to be used in the present invention are not specifically restricted and principally each of such lightweight aggregates known to a person skilled in the art may be used. Preferably, the lightweight aggregates to be used in the present invention are composed predominately of lightweight-cellular and granular inorganic or organic material. Moreover, these lightweight aggregates may also comprise synthetic lightweight aggregates produced from environmental waste such as saw dust.

According to a preferred embodiment of the present invention, the lightweight aggregate used in the present invention is selected from plastic, inorganic, ceramic and multicellular hollow spheres. These aggregates, when dispersed in the monomers of the composition, do not soak, and thus can maintain their beneficial properties in respect to their weight.

Particularly preferred lightweight aggregates to be used in the present invention are phenolic resin based hollow spheres or commercially available plastic hollow spheres such as for example Expancel^{®}. In addition, as preferred inorganic and ceramic hollow spheres, glass bubbles such as amorphous silica or fillite offered by different companies may be mentioned. As already outlined above, preferably, the lightweight aggregates to be used according to the present invention may be produced from environmental waste, particularly from a waste product in the manufacturing process of silicon.

These hollow spheres, which may be also referred to as microspheres, are characterized in their small bulk density and in that they are resistant to most chemicals. In addition, these hollow spheres surprisingly exhibits beneficial properties such as insulating effects as well as flame retarding effects.

According to the present invention, the content of the at least one filler such as a lightweight aggregate in the composition is preferably 1 to 40 wt%, more preferably 4 to 35 wt%, even more preferably 4.5 to 30 wt%, based on the total weight of the composition. The presence of the hollow spheres in the aforementioned amounts surprisingly results in that polymeric materials having a density of 0.5 to 1.4 g/cm³ can be obtained.

Surprisingly, the properties of the resulting polymeric material obtained from the thermally curable composition is hardly influenced by the grain size of the filler and the particle diameter of the hollow spheres, respectively, to be included in the composition. However, according to a preferred embodiment of the present invention, the average grain size of the filler such as the lightweight aggregates is 1 mm or less, preferably 0.5 mm or less and particularly preferred is an average grain size of about 0.1 µm 0.3 mm. In this context, it should be noted that a person skilled in the art is fully aware as to how the average grain size and the average particle diameter, respectively, of the lightweight aggregates can be determined. According to the present invention, the aforementioned values are determined by methods known in the art such as screening or laser diffraction methods.

According to a preferred embodiment of the present invention, the polymeric material further comprises one or more flame retardants such as an Al(OH)₃-based flame retardant or a Mg(OH)₂-based flame retardant, in amounts of 3 to 35 wt%, based on the total weight of the composition. It was surprisingly found that, contrary to the prior art, even such low amounts of Al(OH)₃ and/or Mg(OH)₂ exhibits flame-retarding effects on the resulting polymeric material obtained from the thermally curable composition. For example, when applying a burner to the polymeric material according to the present invention, the flame immediately stops when the burner is removed. To the contrary, if for example the content of the flame retardant of the material described in DE 20 06 197 B2 is reduced to 35 wt% or below, the flame does not immediately stop when the burner is removed. Furthermore, the polymeric material according to the present invention passes the radiant panel test according to DIN EN ISO 9239 to Classes B or C, which is essential for application in floorings. According to a preferred embodiment of the present invention, the content of the flame retardants in the thermally curable composition is 4 to 30 wt%, more preferably 5 to 28 wt%.

In this regard, it should be noted that the terms "Al(OH)₃-based flame retardant" and "Mg(OH)₂-based flame retardant" comprise aluminum hydroxide and magnesium hydroxide, respectively, in each of their known modifications as well as the respective derivatives having less water molecules. In this context, it should be noted that the flame retardants used in the present invention are not limited to the aforementioned Al(OH)₃-based fillers or Mg(OH)₂-based fillers. That means, also other flame retardants known in the art may be used instead of these inorganic flame retardants alone, or in combination therewith.

According to the present invention, when the total amount of components (a) to (c) is within the above ranges in addition to the above-mentioned amounts of fillers and aggregates, it is surprisingly possible to produce flexible and rollable floor coverings as well as coverings having less flexibility which can be used for example as support in an heterogeneous floor covering. Besides, it is possible to produce rigid polymeric materials being impact resistant, which can be used as paneling wall, particularly as protective paneling, or as ceilings. Therefore, according to the present invention, tailor-made polymeric material is provided for different applications.

Thus, the specific combination of different components in the thermally curable composition which results in polymeric materials having reduced weight, not only reduces the weight of the polymeric materials including their shipping weight and the overall costs, but also imparts beneficial thermal and sound insulation as well as flame retarding effects to the polymeric materials. That is, the heat and acoustic conductivity of the polymeric materials according to the present invention is surprisingly low. Thus, polymeric materials according to the present invention have excellent insulating properties.

In addition, the specific combination of different components in the thermally curable composition used in the present invention surprisingly provides polymeric materials being highly resistant to water and chemicals. Further, the polymeric materials according to the present invention are very low in emissions, since the use of commonly used compounds causing unwanted emissions can be avoided.

According to the present invention, the thermally curable composition may further comprise catalysts promoting the polymerization, in particular free-radical polymerization initiators, whereof peroxides are particularly preferred. These polymerization initiators are thermally activatable. Examples of suitable polymerization initiators known in the art include diacyl peroxides, such as benzoyl peroxide or dilauryl peroxide, alkyl hydroperoxides, such as t-butyl hydroperoxide or cumene hydroperoxide, alkyl peroxy esters, such as t-butyl perbenzoate and t-butylperoxy-2-ethylhexanoate, as well as azo compounds such as azodiisobutyronitrile. The catalyst, e.g. the free-radical chain initiator, is preferably used in an amount of 0.1 to 5 wt%, preferably 0.2 to 2 wt%, based on the total weight of the composition.

According to a preferred embodiment of the present invention, the thermally curable composition further comprises at least one polymerization promoter selected from the group consisting of aromatic or aliphatic amines, mercapto based compounds and metal hydroxides. In particular, aromatic amines, such as dimethylaniline, diethylaniline and dimethyl-p-toluidines and aliphatic amines, such as for example substituted aminoethanols (2-dibutylaminoethanol, n-butyldiethanolamine) or substituted aminosilanes (N-cyclohexyl-3-aminopropyltrimethoxysilane, 3-aminopropyltrimethoxysilane, N-cyclohexyl-aminomethylmethyldiethoxysilane) are preferably used as amine accelerators. Further, as preferable mercapto based compounds used as polymerization promoters, for example isooctyl mercaptoacetate, glycol dimercaptoacetate or zinc thioglycolate may be mentioned. Moreover, as preferable metal hydroxides used as polymerization promoters, for example hydroxides of alkali metals and alkaline-earth metals such as calcium hydroxide may be mentioned. These may be used in combination with the aforementioned other polymerization promoters.

According to a preferred embodiment of the present invention, the thermally curable composition comprises:
30 to 60 wt% of (meth)acrylate monomers;
4 to 30 wt% of at least one thermoplastic polymer including poly(meth)acrylate; and/or
0.01 to 5 wt% of at least one comonomer selected from abietic acid-based resins, limonene, pinene, myrcene and camphene or mixtures thereof; and/or
7 to 20 wt% of at least one C₁-C₂₀ di-, tri-, and/or tetracarboxylic acid ester or a derivative thereof; and/or
2 to 40 wt% of a lightweight aggregate selected from the group consisting of plastic, inorganic, ceramic and multicellular hollow spheres; and/or
20 to 30 wt% of an Al(OH)₃- and/or Mg(OH)₂-based flame retardant.

As a non-limiting example, the following particularly preferred composition may be mentioned, which consists of:
32.71 wt% monomeric methylmethacrylate
14.02 wt% polymethylmethacrylate MH 254 (from Lucite)
0.12 wt% 1-methyl-4-prop-1-en-2-yl-cyclohexene (limonene) (from CSC Jäckle Chemie - CAS number 5989-27-5)
15.58 wt% triethyl citrate Citrofol Al (from Jungbunzlauer)
0.32 wt% dimethyl-p-toluidine Pergaquick A150 (from Pergan)
0.93 wt% dibenzoyl peroxide Peroxan BP 50 W (from Pergan)
24.32 wt% alumina trihydrate Aluprem TA 30 (from TOR Minerals)
12.00 wt% fillite (from Omya).

In order to preclude premature hardening of the inventive thermally curable composition during production and storage, stabilizers or inhibitors can be added. As non-limiting examples of stabilizers or inhibitors suitable for preventing premature polymerization, the following compounds may be mentioned: 1,4-dihydroxybenzene, 4-methoxyhydroxybenzene, 2,6-di-t-butylhydroquinone (DTBHQ), phenothiazine (PTZ) and nitrobenzene. These inhibitors are preferably present in an amount of 10 to 1,000 ppm, based on the total weight of the Further, the thermally curable composition used in accordance to the present invention may further comprise various additives known in the art, such as pigments, antistatic materials, additional fillers, and multi-functional cross-linkers. These additives are preferably used, relative to the total weight of the composition, in a proportion of up to 20 wt%.

The present invention further provides an article, according to claims 13-15, such as a molded article, which is preferably in form of a sheeting. Said article, preferably the sheeting, comprises one or more layers, wherein at least one layer comprises the polymeric material according to the present invention. Said at least one layer has a density of 0.5 to 1.4 g/cm³.

According to the present invention, the term "sheeting" has to be understood in its broadest sense and generally refers to plane structures and articles which may be flat or have a specific shape of concave or convex surfaces.

Preferably, the density of the at least one layer in the article, preferably the sheeting, is 0.6 to 1.2 g/cm³, and more preferably 0.65 to 1.1 g/cm³. As outlined above, the low density of the at least one layer in the article, preferably the sheeting, can be accomplished by the specific combination of different components in the thermally curable composition according to the present invention.

According to a preferred embodiment, the article, preferably the sheeting, according to the present invention is substantially free of environmentally problematic and/or harmful materials such as PVC or plasticizers such as phthalates.

According to a particularly preferred embodiment of the present invention, the article, preferably the sheeting, is a floor covering. In this context, it should be noted that the floor covering comprising the article, preferably the sheeting, according to the present invention may be an homogeneous floor covering. Alternatively, the article, preferably the sheeting, may represent the support layer of an heterogeneous floor covering. According to the present invention, the terms homogeneous floor covering and heterogeneous floor covering have to be understood according to the definition stipulated in DIN EN 649. However, it should be noted that the article, preferably the sheeting, may also be used as a paneling wall, a ceiling, a decorative film or a synthetic veneer.

The thickness of the article, preferably the sheeting, according to the present invention is not particularly limited and merely depends on the intended use, *i.e.* whether the article, preferably the sheeting, is used as a paneling wall, a ceiling, a decorative film, a synthetic veneer or a floor covering. Preferably, the thickness of the article, preferably the sheeting, according to the present invention is 2 to 8 mm, more preferably 3 to 5 mm.

As mentioned above, the article, preferably the sheeting, may be an homogeneous floor covering, wherein the article, preferably the sheeting, comprises one or more of the at least one layer which comprises the polymeric material according to the present invention. In this case, the preferred thickness of the article, preferably the sheeting, is 1.5 to 4 mm.

In case that the article, preferably the sheeting, represents the support layer of an heterogeneous floor covering, the preferred thickness of the at least one layer which comprises the polymeric material according to the present invention is 2 to 5 mm.

The products obtained from the polymeric material according to the present invention may further comprise several layers, for example protective coatings or layer coatings imparting coloring and/or patterning, which may be provided in commonly known methods, *i.e.* a transparent cover layer can be backprinted and additionally or alternatively the top side of the article, preferably the sheeting, can be printed or, if present, the top side of the additional layer (white film) may be printed.

According to the present invention it is preferable for the additional layers to consist of prefabricated films, whereby the layers, in particular the thicker layers such as the cover layer and an optional base layer, may be laminates of two or more thinner films.

The present invention further provides a method according to claim 16 for producing an article according to the present invention. In particular, the present invention also relates to a method for producing an article in form of a sheeting to be used as a ceiling, a decorative film or a synthetic veneer and in particular as a floor covering comprising the polymeric material, comprising the steps of:
- providing a polymeric material according to the present invention;
- optionally milling or grinding the polymeric material into pellets and spreading the obtained pellets of the milled or ground polymeric material onto a belt of a fixation system; and
- supplying the polymeric material or the pellets of the milled or ground polymeric material to a fixation step, such as for example a thermofixation step using e.g. a Thermofix^{®}-machine, or a lamination step using e.g. an automatic high-pressure laminating machine.

According to the present invention, providing the polymeric material according to the present invention is not particularly limited and may comprise the steps of:
- providing a thermally curable composition, said composition comprising 45 to 98 wt% of a blend, based on the total weight of the composition, comprising a mixture of (meth)acrylate monomers and, based on the total weight of the blend, 2 to 40 wt% poly(meth)acrylate, and
   at least one of the following components (a) to (c):
   (a) at least one thermoplastic polymer, and/or
   (b) at least one comonomer selected from natural terpenes and derivatives thereof, and/or
   (c) at least one dicarboxylic acid ester or a derivative thereof and/or at least one polycarboxylic acid ester or a derivative thereof; and
   at least one filler, wherein the total amount of components (a) to (c) is in the range of from 0.01 to 55 wt%, based on the total weight of the composition;
- and thermally polymerizing the obtained mixture to produce a cured polymeric material.

With respect to detailed reaction conditions concerning curing of the thermally curable composition used in the present invention, it should be noted that the conditions are generally known to a person skilled in the art, and for example, are described in WO 2008/043486 A1 or US 2005/0090597 A1.

To produce the article, preferably the sheeting, according to the present invention, the equipment/devices and machinery conventionally used for the production of e.g. floor covering may be used, saving costs for additional or specific equipment/devices.

That means, according to the present invention, depending on the desired product to be obtained, the thermally curable composition used in the present invention may be processed in various shapes of the articles to be produced.

In addition, if the polymeric material shall be used e.g. as floor covering, it is possible to produce from the thermally curable composition of the present invention molds in form of plates etc. After being cured, these plates may be milled or ground into pellets. The obtained pellets of the milled or ground polymeric material may be spread onto a belt of a fixation system known in the art, particularly of a low-pressure thermofixation system, or a conventional automatic high-pressure laminating machine (also called an AUMA), preferably a Doppelbandauma or a double belt press. In particular, it is preferred to spread the pellets of the milled or ground polymeric material onto a belt of a Thermofix^{®}-machine, upon which the pellets of the milled or ground polymeric material will be fixed and further processed.

In order to obtain a specific coloration of the polymeric material and the resulting article, which is preferably in form of a sheeting, it is possible to admix pigments to the thermally curable composition as mentioned above, or to admix these pigments to the above-mentioned pellets of the milled or ground polymeric material which can be further processed e.g. in a Thermofix^{®}-machine. It is also possible to provide pellets of the milled or ground polymeric material having different coloration and to mix these pellets of different colors in order to achieve a desired design of the resulting article, which is preferably in form of a sheeting. Thereby, it is for example possible to easily obtain a floor covering having e.g. the desired design at low cost, which can be used as an homogeneous or heterogeneous floor covering. Similarly, other ingredients such as antistatic materials may admixed to the uncured composition, or to the above-mentioned pellets of the milled or ground polymeric material.

In addition, the thermally curable composition used according to the present invention may also be applied directly, *i.e.* as uncured composition, onto a belt of a fixation system such as a low-pressure thermofixation system, whereby an additional process step of milling and/or grinding can be avoided. Here, it should be noted that the direct application of the thermally curable composition according to the present invention includes the application as an uncured composition as well as the application as a cured layer of the polymeric material. Both can be provided to the fixation system either alone, or in combination with additional layers mentioned above, *i.e.* cover layers which may be backprinted or base layers. As already outlined above, the obtained polymeric material according to the present invention can be provided easily and inexpensively and can be used as paneling walls, ceilings, decorative films, synthetic veneer and in particular as a floor covering. The article, preferably the sheeting, according to the present invention is particularly suited to be used as paneling walls, as ceilings and as an homogeneous or heterogeneous floor covering. These can be provided as rollable sheets, tiles, panels. As mentioned above, since the flexibility of the polymeric material and the resulting article, which is preferably in form of a sheeting, can be desirably adjusted ("tailor-made production") by varying especially the amounts of components (a) to (c) within the defined weight-ranges, according to the present invention it is possible to produce a highly flexible material as well as a relatively rigid material. In addition, due to the specific combination of different components in the thermally curable composition which results in polymeric materials having not only reduced weight but also beneficial thermal and sound insulation properties, flame retarding properties, resistance to water and chemicals as well as being low in emissions, the polymeric material according to the present invention is also particularly suited to be used for the manufacture of floor covering in the sanitary sector or in hospitals. For the same reasons, the polymeric material according to the present invention is also particularly suited to be used for the manufacture of furniture.

## Claims

1. A polymeric material obtainable by thermally curing a composition, said composition comprising
45 to 98 wt% of a blend, based on the total weight of the composition, comprising
a mixture of (meth)acrylate monomers and, based on the total weight of the blend, 2 to 40 wt% poly(meth)acrylate, and
at least one of the following components (b):
(b) at least one comonomer selected from natural terpenes and derivatives thereof, and
at least one filler,
wherein the total amount of components (b) is in the range of from 0.01 to 55 wt%, based on the total weight of the composition.

2. The polymeric material according to claim 1, further comprising at least one of the following components (a) or (c):
(a) at least one thermoplastic polymer which is different from the poly(meth)-acrylate and which is soluble in the (meth)acrylate monomers, and/or
(c) at least one organic compound not participating in the polymerization and having a molecular weight of 500 or below selected from at least one dicarboxylic acid ester or a derivative thereof and/or at least one polycarboxylic acid ester or a derivative thereof,
wherein the total amount of components (a) to (c) is in the range of from 0.01 to 55 wt%, based on the total weight of the composition.

3. The polymeric material according to claim 2, wherein the thermoplastic polymer of component (a) is selected from the group consisting of acrylonitrile butadiene styrene, polystyrene, thermoplastic elastomers, polyester elastomers, thermoplastic polyurethanes, thermoplastic polyamide copolymers or mixtures thereof.

4. The polymeric material according to any one of claims 1 to 3, wherein the comonomer of component (b) is selected from the group consisting of abietic acid-based resins, limonene, pinene, myrcene and camphene or mixtures thereof.

5. The polymeric material according to any one of claims 2 to 4, wherein component (c) is selected from the group consisting of C₁-C₂₀ di-, tri-, and tetracarboxylic acid esters.

6. The polymeric material according to any one of claims 1 to 5, wherein the filler comprises at least one lightweight aggregate.

7. The polymeric material according to any one of claims 2 to 6, wherein the content of the thermoplastic polymer of component (a) and the poly(meth)acrylate is 2 to 40 wt%, based on the total amount of the blend.

8. The polymeric material according to any one of claims 1 to 7, wherein the content of component (b) is 0.01 to 20 wt%, based on the total weight of the composition.

9. The polymeric material according to any one of claims 2 to 8, wherein the content of component (c) is 1 to 45 wt%, based on the total weight of the composition.

10. The polymeric material according to any one of claims 1 to 9, wherein the content of the filler is 1 to 40 wt%, based on the total weight of the composition.

11. The polymeric material according to any one of claims 1 to 9, further comprising 3 to 35 wt% of an Al(OH)₃- and/or Mg(OH)₂-based flame retardant.

12. The polymeric material according to any one of claims 1 to 10, wherein the composition comprises:
30 to 60 wt% of (meth)acrylate monomers;
4 to 30 wt% of at least one thermoplastic polymer including poly(meth)acrylate; 0.01 to 5 wt% of at least one comonomer selected from abietic acid-based resins, limonene, pinene, myrcene and camphene or mixtures thereof;
7 to 20 wt% of at least one C₁-C₂₀ di-, tri-, and/or tetracarboxylic acid ester or a derivative thereof;
2 to 40 wt% of a lightweight aggregate selected from the group consisting of plastic, inorganic, ceramic and multicellular hollow spheres; and
20 to 30 wt% of an Al(OH)₃- and/or Mg(OH)₂-based flame retardant.

13. An article in form of a sheeting comprising one or more layers, wherein at least one layer comprises the polymeric material as defined in any one of claims 1 to 12 and said at least one layer has a density of 0.5 to 1.4 g/cm³.

14. The article according to claim 13, wherein the at least one layer has a thickness of 0.5 to 8 mm.

15. The article according to claim 13 or 14, which is a support layer of an heterogeneous floor covering.

16. A method for producing the article as defined in any one of claims 13 to 15, comprising the steps of:
providing a polymeric material as defined in any one of claims 1 to 12;
optionally milling or grinding the polymeric material into pellets and spreading the obtained pellets of the milled or ground polymeric material onto a belt of a fixation system; and
supplying the polymeric material or the pellets of the milled or ground polymeric material to a fixation step.

## Patentansprüche

1. Polymerwerkstoff, der durch das thermische Härten einer Zusammensetzung erhältlich ist, wobei die Zusammensetzung
45 bis 98 Gew.-%, bezogen auf das Gesamtgewicht der Zusammensetzung, einer Mischung, umfassend ein Gemisch aus (Meth)acrylatmonomeren und, bezogen auf das Gesamtgewicht der Mischung, 2 bis 40 Gew.-% Poly(meth)acrylat, und
mindestens eine der folgenden Komponenten (b):
(b) mindestens ein Comonomer, ausgewählt aus natürlichen Terpenen und Derivaten davon, und
mindestens einen Füllstoff umfasst,
wobei die Gesamtmenge der Komponenten (b) im Bereich von 0,01 bis 55 Gew.-%, bezogen auf das Gesamtgewicht der Zusammensetzung, liegt.

2. Polymerwerkstoff nach Anspruch 1, ferner umfassend mindestens eine der folgenden Komponenten (a) oder (c):
(a) mindestens ein thermoplastisches Polymer, welches von dem Poly(meth)acrylat verschieden ist, und welches in den (Meth)acrylatmonomeren löslich ist, und/oder
(c) mindestens eine organische Verbindung, die nicht in der Polymerisierung teilnimmt und ein Molekulargewicht von 500 oder niedriger aufweist, ausgewählt aus mindestens einem Dicarbonsäureester oder einem Derivat davon und/oder mindestens einem Polycarbonsäureester oder einem Derivat davon,
wobei die Gesamtmenge der Komponenten (a) bis (c) im Bereich von 0,01 bis 55 Gew.-%, bezogen auf das Gesamtgewicht der Zusammensetzung, liegt.

3. Polymerwerkstoff nach Anspruch 2, wobei das thermoplastische Polymer der Komponente (a) aus der Gruppe ausgewählt ist, bestehend aus AcrylnitrilButadien-Styrol, Polystyrol, thermoplastischen Elastomeren, Polyester-Elastomeren, thermoplastischen Polyurethanen, thermoplastischen Polyamid-Copolymeren oder Gemischen davon.

4. Polymerwerkstoff nach einem der Ansprüche 1 bis 3, wobei das Comonomer der Komponente (b) aus der Gruppe ausgewählt ist, bestehend aus Harzen auf der Basis von Abietinsäure, Limonen, Pinen, Myrcen und Camphen oder Gemischen davon.

5. Polymerwerkstoff nach einem der Ansprüche 2 bis 4, wobei die Komponente (c) aus der Gruppe ausgewählt ist, bestehend aus C₁-C₂₀ Di-, Tri- und Tetracarbonsäureestern.

6. Polymerwerkstoff nach einem der Ansprüche 1 bis 5, wobei der Füllstoff mindestens einen Leichtzuschlagstoff umfasst.

7. Polymerwerkstoff nach einem der Ansprüche 2 bis 6, wobei der Gehalt des thermoplastischen Polymers der Komponente (a) und des Poly(meth)acrylats 2 bis 40 Gew.-%, bezogen auf die Gesamtmenge der Mischung, beträgt.

8. Polymerwerkstoff nach einem der Ansprüche 1 bis 7, wobei der Gehalt an Komponente (b) 0,01 bis 20 Gew.-%, bezogen auf das Gesamtgewicht der Zusammensetzung, beträgt.

9. Polymerwerkstoff nach einem der Ansprüche 2 bis 8, wobei der Gehalt an Komponente (c) 1 bis 45 Gew.-%, bezogen auf das Gesamtgewicht der Zusammensetzung, beträgt.

10. Polymerwerkstoff nach einem der Ansprüche 1 bis 9, wobei der Gehalt des Füllstoffs 1 bis 40 Gew.-%, bezogen auf das Gesamtgewicht der Zusammensetzung, beträgt.

11. Polymerwerkstoff nach einem der Ansprüche 1 bis 9, ferner umfassend 3 bis 35 Gew.-% eines Al(OH)₃- und/oder Mg(OH)₂-basierten Flammschutzmittels.

12. Polymerwerkstoff nach einem der Ansprüche 1 bis 10, wobei die Zusammensetzung umfasst:
30 bis 60 Gew.-% (Meth)acrylatmonomere;
4 bis 30 Gew.-% mindestens eines thermoplastischen Polymers, einschließlich Poly(meth)acrylat;
0,01 bis 5 Gew.-% mindestens eines Comonomers, ausgewählt aus Harzen auf der Basis von Abietinsäure, Limonen, Pinen, Myrcen und Camphen oder Gemischen davon;
7 bis 20 Gew.-% mindestens eines C₁-C₂₀ Di-, Tri- und/oder Tetracarbonsäureesters oder eines Derivats davon;
2 bis 40 Gew.-% eines Leichtzuschlagstoffes, ausgewählt aus der Gruppe, bestehend aus Kunststoff-, anorganischen, keramischen und mehrzelligen Hohlkugeln; und
20 bis 30 Gew.-% eines Al(OH)₃- und/oder Mg(OH)₂-basierten Flammschutzmittels.

13. Gegenstand in Form einer Folie, umfassend eine oder mehrere Schichten, wobei mindestens eine Schicht den Polymerwerkstoff nach einem der Ansprüche 1 bis 12 umfasst und diese mindestens eine Schicht eine Dichte von 0,5 bis 1,4 g/cm³ aufweist.

14. Gegenstand nach Anspruch 13, wobei die mindestens eine Schicht eine Dicke von 0,5 bis 8 mm aufweist.

15. Gegenstand nach Anspruch 13 oder 14, welcher eine Trägerschicht von einem heterogenen Bodenbelag ist.

16. Verfahren zur Herstellung des Gegenstandes nach einem der Ansprüche 13 bis 15, umfassend die Schritte:
Bereitstellen eines Polymerwerkstoffs nach einem der Ansprüche 1 bis 12;
gegebenenfalls Mahlen oder Zerkleinern des Polymerwerkstoffs in Pellets und Ausbreiten der erhaltenen Pellets des gemahlenen oder zerkleinerten Polymerwerkstoffs auf ein Band eines Fixierungssystems; und
Zuführen des Polymerwerkstoffs oder der Pellets des gemahlenen oder zerkleinerten Polymerwerkstoffs zu einem Fixierungsschritt.

## Revendications

1. Matériau polymère pouvant être obtenu par durcissement thermique d'une composition, ladite composition comprenant :
45 à 98% en poids, sur base du poids total de la composition, d'un mélange comprenant :
un mélange de monomères (méth)acrylate et, sur base du poids total du mélange, 2 à 40% en poids de poly(méth)acrylate, et
au moins l'un des composants (b) suivants :
(b) au moins un comonomère choisi parmi les terpènes naturels et leurs dérivés, et
au moins une charge,
où la quantité totale des composants (b) se situe dans l'intervalle allant de 0,01 à 55% en poids, sur base du poids total de la composition.

2. Matériau polymère selon la revendication 1, comprenant en outre, au moins l'un des composants (a) ou (c) suivants :
(a) au moins un polymère thermoplastique, qui est différent du poly(méth)acrylate et qui est soluble dans les monomères (méth)acrylate, et/ou
(c) au moins un composant organique ne participant pas à la polymérisation et ayant un poids moléculaire de 500 ou moins, choisi parmi au moins un ester de diacide carboxylique ou d'un dérivé de celui-ci et/ou au moins un ester de poly(acide carboxylique) ou d'un dérivé de celui-ci,
où la quantité totale des composants (a) à (c) se situe dans l'intervalle allant de 0,01 à 55% en poids, sur base du poids total de la composition.

3. Matériau polymère selon la revendication 2, où le polymère thermoplastique du composant (a) est choisi parmi le groupe consistant en acrylonitrile-butadiène-styrène, le polystyrène, des élastomères thermoplastiques, des élastomères de type polyester, des polyuréthannes thermoplastiques, des copolymères thermoplastiques de polyamide ou leurs mélanges.

4. Matériau polymère selon l'une quelconque des revendications 1 à 3, où le comonomère du composant (b) est choisi parmi le groupe consistant en les résines à base d'acide abiétique, le limonène, le pinène, le myrcène et le camphène, ou leurs mélanges.

5. Matériau polymère selon l'une quelconque des revendications 2 à 4, où le composant (c) est choisi parmi le groupe consistant en des esters de di-, tri- et tétra-acide carboxylique en C₁-C₂₀.

6. Matériau polymère selon l'une quelconque des revendications 1 à 5, où la charge comprend au moins un agrégat léger.

7. Matériau polymère selon l'une quelconque des revendications 2 à 6, où la teneur en polymère thermoplastique du composant (a) et du poly(méth)acrylate se situe dans l'intervalle allant de 2 à 40% en poids, sur base de la quantité totale du mélange.

8. Matériau polymère selon l'une quelconque des revendications 1 à 7, où la teneur en composant (b) se situe dans l'intervalle allant de 0,01 à 20% en poids, sur base de la quantité totale de la composition.

9. Matériau polymère selon l'une quelconque des revendications 2 à 8, où la teneur en composant (c) se situe dans l'intervalle allant de 1 à 45% en poids, sur base de la quantité totale de la composition.

10. Matériau polymère selon l'une quelconque des revendications 1 à 9, où la teneur en charge se situe dans l'intervalle allant de 1 à 40% en poids, sur base de la quantité totale de la composition.

11. Matériau polymère selon l'une quelconque des revendications 1 à 9, comprenant en outre, 3 à 35% en poids d'un retardateur de flammes à base de Al(OH)₃ et/ou de Mg(OH)₂.

12. Matériau polymère selon l'une quelconque des revendications 1 à 10, où la composition comprend :
30 à 60% en poids de monomères (méth)acrylate ;
4 à 30% en poids d'au moins un polymère thermoplastique comprenant un poly(méth)acrylate ;
0,01 à 5% en poids d'au moins un comonomère choisi parmi les résines à base d'acide abiétique, le limonène, le pinène, le myrcène et le camphène, ou leurs mélanges ;
7 à 20% en poids d'au moins un ester de di-, tri- et/ou tétra-acide carboxylique en C₁-C₂₀ ou un dérivé de celui-ci ;
2 à 40% en poids d'un agrégat léger choisi parmi le groupe consistant en des sphères creuses en matière plastique, inorganique, céramique et multicellulaire ; et
20 à 30% en poids d'un retardateur de flammes à base de Al(OH)₃ et/ou de Mg(OH)₂.

13. Article sous forme d'une feuille comprenant une ou plusieurs couches, où au moins une couche comprend la matière polymère telle que définie dans l'une quelconque des revendications 1 à 12, laquelle couche présente une densité allant de 0,5 à 1,4 g/cm³.

14. Article selon la revendication 13, où la au moins une couche a une épaisseur allant de 0,5 à 8 mm.

15. Article selon la revendication 13 ou 14, qui est une couche support d'un revêtement de sol hétérogène.

16. Procédé de production d'un article tel que défini dans l'une quelconque des revendications 13 à 15, comprenant les étapes de :
obtention d'un matériau polymère tel que défini dans l'une quelconque des revendications 1 à 12,
le cas échéant, meulage ou broyage du matériau polymère en granulés et étalement des granulés obtenu du matériau polymère meulé ou broyé sur une bande transporteuse d'un système de fixation, et
alimentation du matériau polymère ou des granulé du matériau polymère meulé ou broyé dans une étape de fixation.
